(19) Europäisches Patentamt

European Patent Office

Office européen des brevets

(11) **EP 2 642 786 B1**

(12) **EUROPEAN PATENT SPECIFICATION**

(45) Date of publication and mention
of the grant of the patent:
**02.03.2016 Bulletin 2016/09**

(51) Int Cl.:
***H04W 24/08*** *(2009.01)*    *H04W 84/00* *(2009.01)*
***H04W 84/04*** *(2009.01)*

(21) Application number: **12160592.7**

(22) Date of filing: **21.03.2012**

(54) **Method and a device for detecting if a mobile terminal is in at least two coverage areas**

Verfahren und Vorrichtung zum Erkennen, ob ein mobiles Endgerät sich in mindestens zwei Abdeckungsbereichen aufhält

Procédé et dispositif permettant de détecter si un terminal mobile se trouve dans au moins deux zones de couverture

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.09.2013 Bulletin 2013/39**

(73) Proprietors:
• **Mitsubishi Electric R&D Centre Europe B.V.**
**1119 NS Schiphol Rijk (NL)**
Designated Contracting States:
**FR**
• **Mitsubishi Electric Corporation**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **Ciochina, Cristina**
**35708 Rennes Cedex 7 (FR)**
• **Brunel, Loïc**
**35708 Rennes Cedex 7 (FR)**

(74) Representative: **Maillet, Alain**
**Cabinet Le Guen Maillet**
**5, place Newquay**
**B.P. 70250**
**35802 Dinard Cedex (FR)**

(56) References cited:
**WO-A2-2010/105210    US-A1- 2011 086 652**
**US-A1- 2011 274 097**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates generally to a method and a device for detecting if a mobile terminal is in at least two coverage areas of at least two home base stations having the same physical cell identity and being synchronized.

Wireless cellular telecommunication networks are largely deployed but there are still some areas not covered by the base stations of the wireless cellular telecommunication network.

Solutions are proposed today. Particular base stations, like home base stations or femto base stations, provide coverage areas within the buildings or in moving conveyance like bus, trains or elevators.

Each radio cell of base stations or home base stations has an attached Physical Cell Identity (PCI). The PCI is used to identify the cell in its radio neighborhood. As opposed to some global cell identities which are uniquely identified in the wireless cellular telecommunication network, the PCI is not unique.

For example, in the 3GPP LTE (Long Term Evolution) standard, there are five hundred four different values available for the PCI, composed of one hundred sixty eight groups of three identities.

In order for a mobile terminal to be able to communicate with a base station or a home base station, the mobile terminal must know the PCI of the corresponding radio cell. PCI knowledge is acquired during the synchronization phase. Synchronization signals are broadcasted at regular intervals by the base stations or the home base stations. In 3GPP LTE for example, synchronization signals are sent twice per radio frame, every 5ms placed onto a given number of subcarriers, six resource blocks occupying seventy two subcarriers in the center of the bandwidth.

Knowing the PCI of the serving cell, the mobile terminal can determine many system parameters that depend on the PCI value like pilot values, pilot positions, hopping sequences. In 3GPP LTE for example, the UL DM-RS sequence (uplink demodulation reference signal) and group hopping pattern depend on the PCI value, and CRS (common RS) position depends on PCI modulo 6.

In cases where for example a macro cell and many femto cells coexist, there is a high probability of having several cells with the same PCI. In static environments, network planning is done such as to avoid having neighboring cells with the same PCI.

In an environment where there are moving home base stations, an itinerant cell may arrive into a neighborhood where a cell with the same PCI already exists. PCI collision may for example occur between the mobile home base station and a fixed home base station or another mobile home base station. The algorithms conceived for a static scenario can no longer be applied.

PCI collision can cause severe effects. If the two cells in the same geographical area having the same PCI are synchronized, pilot collision will occur. In this case, the mobile terminal estimates an erroneous channel consisting of the superposition of the channels between the mobile terminal and respective home base stations that may lead to the loss of the communication link between the serving home base station and the mobile terminal.

The patent application US 2011/0274097 discloses a method for detecting and reporting physical layer cell identifier collisions in wireless networks.

The present invention aims at providing a solution which enables to detect PCI collisions.

To that end, the present invention concerns a method for detecting if a mobile terminal is in at least two coverage areas of at least two home base stations having the same physical cell identity and being synchronized, one of the home base stations serving the mobile terminal and transferring to the mobile terminal data and pilot symbols, at least one of the home base stations changing its location as defined in claim 1.

The present invention concerns also a device for detecting if a mobile terminal is in at least two coverage areas of at least two home base stations having the same physical cell identity and being synchronized, one of the home base stations serving the mobile terminal and transferring to the mobile terminal data and pilot symbols, at least one of the home base stations changing its location as defined in claim 4.

Thus, the mobile terminal is able to rapidly detect an occurring PCI collision and no loss of the communication link between the serving home base station and the mobile terminal occurs.

According to a particular feature, the level of estimated interference on pilot symbols received by the mobile terminal is computed on frames of data successfully decoded and/or on frames of data not successfully decoded.

Thus, the mobile terminal can take benefit from the presence of pilots in part or all frames if needed. The mobile terminal detects an occurring PCI collision rapidly.

According to a particular feature, the level of estimated interference on data received by the mobile terminal is computed on frames of data successfully decoded and/or on frames of data not successfully decoded.

Thus, the mobile terminal can improve the quality of the estimation by using data on both successfully and unsuccessfully decoded frames, or can lower the complexity by using either data in successfully decoded frames or data in unsuccessfully decoded frames.

According to a particular feature, one level of estimated interference on data received by the mobile terminal is computed on frames where data is successfully decoded and one level of estimated interference on data symbols received by the mobile terminal is computed on frames where data is not successfully decoded and in that the method comprises further step of selecting one of the levels of estimated interference on data received by the mobile terminal.

Thus, the mobile terminal can improve the quality of the estimation.

According to a particular feature, the selected level of estimated interference on data received by the mobile terminal performed on data is the one which is the most reliable.

Thus, the mobile terminal can improve the quality of the estimation.

According to a particular feature, the determination if the mobile terminal is in at least two coverage areas of at least two home base stations having the same physical cell identity and being synchronized is performed by subtracting the level of estimated interference on pilot symbols received by the mobile terminal from the level of estimated interference on data received by the mobile terminal.

Thus, the mobile terminal is able to rapidly detect an occurring PCI collision by monitoring frequently received symbols such as data and pilot symbols.

According to a particular feature, the method comprises further step of comparing the result of the subtracting to a threshold.

Thus, the mobile terminal is able to rapidly detect an occurring PCI collision by monitoring frequently received symbols such as data and pilot symbols.

According to a particular feature, the determination if the mobile terminal is in at least two coverage areas of at least two home base stations having the same physical cell identity and being synchronized is performed by calculating an information from the computed level of estimated interference on data received by the mobile terminal, from the computed level of estimated interference on pilot symbols received by the mobile terminal, from a power factor applied on pilot symbols transferred by the home base station serving the mobile terminal and from a variance of an estimation error on the channel between the serving home base station and the mobile terminal.

Thus, the mobile terminal can improve the quality of the estimation by taking into account the variance of the channel estimation error and the power factor.

According to a particular feature, the determination if the mobile terminal is in at least two coverage areas of at least two home base stations having the same physical cell identity and being synchronized is performed by calculating an information from the computed level of estimated interference on data received by the mobile terminal, from the computed level of estimated interference on pilot symbols received by the mobile terminal, from the number of frames of data successfully decoded and from the number of frames of data unsuccessfully decoded.

Thus, the mobile terminal can improve the quality of the estimation.

According to a particular feature, the calculated information $(X_d - X_p)|_{corrected}$ is calculated according to the following formula: $\left(X_d - X_p\right)\Big|_{corrected} = \left(a\left(X_d - X_p\right) + b\left(X'_d - X_p - 2\sigma_{h_1}^2\right)\right)/\left(a + b\right)$ where $a$ is the number of frames of data successfully decoded, b is the number of frames of data unsuccessfully decoded, $X_p$ is the level of estimated interference on pilot symbols received by the mobile terminal, $X_d$ is the level of estimated interference on data received by the mobile terminal computed on frames of data successfully decoded, $X'_d$ is the level of estimated interference on data received by the mobile terminal computed on frames of data unsuccessfully decoded and $2\sigma_{h_1}^2$ is the variance of the estimate of the channel between the mobile terminal and the home base station serving the mobile terminal.

Thus, the mobile terminal can improve the quality of the estimation.

According to a particular feature, the calculated information is compared to a threshold.

According to a particular feature, the determination if the mobile terminal is in at least two coverage areas of at least two home base stations having the same physical cell identity and being synchronized is performed from the evolution of computed level of estimated interference on data received by the mobile terminal and from the evolution of the computed level of estimated interference on pilot symbols received by the mobile terminal.

Thus, detection based on longer term statistics is possible, the mobile terminal can improve the quality of the estimation.

According to still another aspect, the present invention concerns computer programs which can be directly loadable into a programmable device, comprising instructions or portions of code for implementing the steps of the method according to the invention, when said computer programs are executed on a programmable device.

Since the features and advantages relating to the computer programs are the same as those set out above related to the method and apparatus according to the invention, they will not be repeated here.

The characteristics of the invention will emerge more clearly from a reading of the following description of an example embodiment, the said description being produced with reference to the accompanying drawings, among which :

Fig. 1 represents a wireless cellular telecommunication network in which the present invention is implemented;

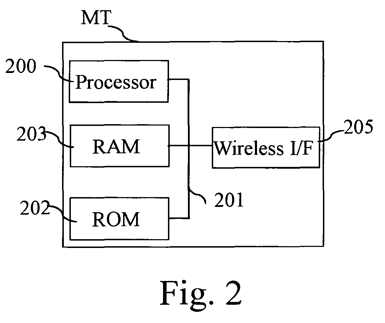

Fig. 2 is a diagram representing the architecture of a mobile terminal in which the present invention is implemented;
Fig. 3 discloses a first example of an algorithm executed by a mobile terminal according to the present invention;

Fig. 4 discloses a second example of an algorithm executed by a mobile terminal according to the present invention;
Fig. 5 discloses a third example of an algorithm executed by a mobile terminal according to the present invention;
Fig. 6 discloses a fourth example of an algorithm executed by a mobile terminal according to the present invention;
Fig. 7 discloses a fifth example of an algorithm executed by a mobile terminal according to the present invention;
Fig. 8 discloses a sixth example of an algorithm executed by a mobile terminal according to the present invention.

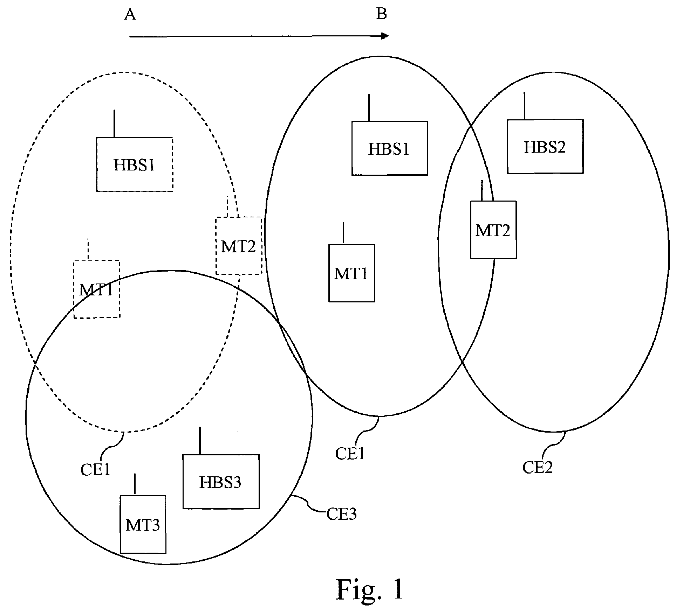

**Fig. 1** represents a wireless cellular telecommunication network in which the present invention is implemented.

The present invention is described in an example with home base stations. The same could be applied for base stations which have coverage areas larger than the one of home base stations.

In Fig. 1, three home base stations HBS1, HBS2 and HBS3 of a wireless cellular telecommunication network and three mobile terminals MT1, MT2 and MT3 are shown.

Only three home base stations HBS1, HBS2 and HBS3 and three mobile terminals MT1, MT2 and MT3 are shown but we can understand that the present invention works when a more important number of home base stations HBS and/or a more important number of mobile terminals MT exist.

The home base stations HBS1, HBS2 and HBS3 can also be named femto base stations or pico base stations or relays.

The home base station HBS1 is for example located in a moving conveyance, not shown in Fig. 1, like a train or a bus or an elevator and enables mobile terminals MT1 and MT2 located within the moving conveyance to establish or continue a communication with a remote telecommunication device through the home base station HBS1.

The home base station HBS1 is able to receive signals transferred by mobile terminals MT which are located in the area CE1. The home base station HBS1 transfers signals which can be received and processed by mobile terminals MT located in the area CE1. The area CE 1 is the coverage area of the home base station HBS1.

The home base stations HBS2 and HBS3 are located in given positions, for example in buildings surrounding the path of the moving conveyance or in other moving conveyances than the one the home base station HBS1 is located in.

The home base station HBS2 is able to receive signals transferred by mobile terminals MT which are located in the area CE2. The home base station HBS2 transfers signals which can be received and processed by mobile terminals MT located in the area CE2. The area CE2 is the coverage area of the home base station HBS2.

The home base station HBS3 is able to receive signals transferred by mobile terminals MT which are located in the area CE3. The home base station HBS3 transfers signals which can be received and processed by mobile terminals MT located in the area CE3. The area CE3 is the coverage area of the home base station HBS3. The mobile terminals MT1 and MT2 are served by the home base station HBS1. The mobile terminal MT3 is served by the home base station HBS3.

When a mobile terminal MT is served by a home base station HBS, the mobile terminal can receive and/or establish a communication with a remote telecommunication device through the home base station HBS.

When a mobile terminal MT is attached to a home base station HBS, the mobile terminal MT is served by the home base station HBS and has already read the PCI of the home base station HBS during the synchronization process.

The home base stations HBS1 and HBS2 have the same Physical Cell Identity and are synchronized.

The home base stations HBS1 and HBS3 are synchronized, have different PCI, but have the same modulo 6 value as PCI.

When the home base station HBS1 is located in the position noted A in Fig. 1, no PCI collision occurs for the mobile terminal MT2 attached to the home base station HBS1 since the mobile terminal MT2 is not in any of the neighbouring coverage areas CE2 and CE3.

When the home base station HBS1 moves to the position noted B in Fig. 1, interference may occur for the mobile terminal MT2 which is located in both coverage areas CE 1 and CE2.

While in communication with the home base station HBS1, the mobile terminals MT1 and MT2 estimate the downlink channel based on the pilots symbols sent by the home base station HBS1.

For example, in 3GPP Long Term Evolution, usually referred to as LTE, home base stations HBS or base stations transfer in the downlink channel, i.e. the channel for transferring signals to mobile terminals, cell-specific Common Reference Signals (CRS) which are used for channel estimation by the mobile terminals MT. The positions of the CRS depend on the PCI modulo 6 value.

The estimated channel is used for decoding the data received by the mobile terminal MT. Data can be user-specific data e.g. Physical Downlink Shared Channel (PDSCH) or control data (e.g. Physical Downlink Control Channel (PDCCH).

Let consider that the mobile terminal MT2 enters, at location B, in the coverage area CE2 of home base station HBS2 synchronized with and having the same PCI as the home base station HBS1.

The common reference signals sent from the two home base stations HBS1 and HBS2 have colliding positions and the interfered mobile terminal MT2 experiences onto the positions of the common reference signals a channel that can be expressed as a mix between a channel $h_1$ between the home base station HBS1 and the mobile terminal MT2, and an interfering channel $h_2$ between the home base station HBS2 and the mobile terminal MT2.

Thus, the mobile terminal MT2 uses the estimate of the joint channel which is the superposition of $h_1$ and $h_2$ in order to decode the data originating from the home base station HBS1 and transferred only through the channel $h_1$. This results in increased estimated interference level on both control and user-specific data, if the user-specific data has been decoded based on the common reference signals.

For example, in 3GPP Long Term Evolution Advanced, usually referred to as LTE-A, besides Common Reference Signals, downlink demodulation reference signals (DM-RS) are also used. In some particular cases, the mobile terminal MT has downlink demodulation reference signals and can use the downlink demodulation reference signals for channel estimation in order to decode user-specific data. Downlink demodulation reference signals are mobile terminal MT specific pilots precoded in the same way as the data and allowing the mobile terminal MT to estimate the downlink channel used for mobile terminal MT specific data transmission.

In the following, we will denote by "pilots" the cell-specific downlink reference signals (e.g., Common Reference Signals in LTE) and by "data" the control and/or user specific data decoded using the Common Reference Signals based channel estimation.

In many practical systems, pilot boosting is used to improve the performance of channel estimation. Let us assume that the pilots of the serving home base station HBS1 are power boosted by a factor of $\alpha$ with respect to the data, that the pilots of the interfering home base station HBS2 are power boosted by a factor of $\beta$ with respect to the data part, and let us denote by $\gamma$ the ratio $\beta/\alpha$.

Lets denote by $d$ a data symbol and by $p$ a pilot symbol before power boosting sent by the home base station HBS1. Finally, let $\varepsilon$ be the channel estimation error and $n$ the channel noise.

Let us consider the case when the home base station HBS1 is at position A. The mobile terminal MT2 receives data from the serving home base station HBS1 and is able to correctly decode the data. Thus, the estimated data symbol $d$ is the sent data symbol, $\hat{d} = d$. Correct data decoding can be detected by using for example a cyclic redundancy check (CRC). The data and respectively pilot signals received by the mobile terminal MT2 on a resource element at position A, denoted $\gamma_{d1}$ and respectively $\gamma_{p1}$, can be written as follows:

$$y_{d1} = h_1 d + n$$

$$y_{p1} = h_1 \sqrt{\alpha}\, p + n$$

Based on the received pilot symbol $y_{p1}$, the mobile terminal MT2 estimates the downlink channel with the home base station HBS1 as:

$$\hat{h}_1 = h_1 + \varepsilon$$

where the estimation error $\varepsilon$ has a variance $\sigma_\varepsilon^2$ depending on the type of channel estimation implemented at the mobile terminal MT2. $\sigma_x^2$ denotes the variance of x. The variance $\sigma_\varepsilon^2$ also depends on the noise variance $\sigma_n^2$. A fixed average value may be used for $\sigma_\varepsilon^2$ or a value depending on the noise variance may be used, since the value of noise variance is usually estimated in the decoding stages. To simplify the notations, we will always use the notation $\sigma_\varepsilon^2$.

Without loss of generality, we can assume that data is normalized and thus the data variance is one.

The mobile terminal MT2 is able to estimate the level of interference $X_{d1}$ present on the data part and $X_{p1}$ on the pilot part:

$$X_{d1} = E\left\{\left| y_{d1} - \hat{h}_1 d \right|^2\right\} = E\left\{\left| -\varepsilon d + n \right|^2\right\} = \sigma_\varepsilon^2 + \sigma_n^2$$

$$X_{p1} = E\left\{\left| y_{p1} - \hat{h}_1 \sqrt{\alpha}\, p \right|^2\right\} = E\left\{\left| -\varepsilon \sqrt{\alpha}\, p + n \right|^2\right\} = \alpha\sigma_\varepsilon^2 + \sigma_n^2$$

where E{.} denotes the expectation of a variable. The mobile terminal MT2 is thus also able to estimate $X_{d1}$-$X_{p1}$. This value is theoretically equal to:

$$X_{d1} - X_{p1} = -(\alpha - 1)\sigma_\varepsilon^2$$

In position A, no collision is occurring, the mobile terminal MT2 experiences a stable estimated level of interference both on the pilot and data part when the noise variance does not vary too much. We can also state that $X_{d1} - X_{p1} + (\alpha - 1)\sigma_\varepsilon^2$ that can be computed by the mobile terminal MT2 has a stable trend and values around zero.

Let us now consider the mobile terminal MT1 at position A. The mobile terminal MT1 attached to HBS1 is located in the coverage areas CE1 and CE3.

The home base stations HBS1 and HBS3 are synchronized, have different PCI, but have the same modulo 6 value as PCI.

Pilot position collision occurs since the pilot positions depend on the value of PCI modulo 6. Since the PCIs of the two home base stations HBS1 and HBS3 are different, pilot values on colliding positions are different for the home base stations HBS1 and HBS3.

The effect of the signals sent from the home base station HBS3 can be seen as a simple interference case. At position A, the data and respectively pilot signals received by the mobile terminal MT1 on a resource element, denoted $y_{d2}$ and respectively $y_{p2}$, can be written as follows:

$$y_{d2} = h_1 d + i_1 + n$$

$$y_{p2} = h_1 \sqrt{\alpha}\, p + i_2 + n$$

where $i_1$ is the interference suffered on the data part and $i_2$ is the interference suffered on the pilots. $i_1$ depends on the resource allocation decided by the interfering home base station HBS3 for the mobile terminals attached to it. $i_1$ can be null if the interfering home base station HBS3 is not serving any mobile terminal MT on overlapping resources with respect to the mobile terminal MT1. In this case, $\sigma_{i_1}^2 = 0$. $i_2$ depends on the pilot boosting operated by the interfering home base station HBS3, is non-null and more important than the interference on the data part. Thus, $\sigma_{i_1}^2 < \sigma_{i_2}^2$. The interference level on the pilots is stronger than the interference level on the data.

Based on the received pilot symbol $y_{p2}$, the mobile terminal MT1 estimates the downlink channel $\hat{h}_1$ between the mobile terminal MT 1 and the home base station HBS1 as:

$$\hat{h}_1 = h_1 + \varepsilon'$$

where the estimation error $\varepsilon'$ has a variance $\sigma_{\varepsilon'}^2$ depending on the type of channel estimation implemented at the mobile terminal MT1. The interference plus noise present in this case is larger than in the case described for the mobile terminal MT2 at position A, $\sigma_{\varepsilon'}^2 \geq \sigma_\varepsilon^2$.

The mobile terminal MT1 is able to estimate the level of interference $X_{d2}$ present on the data part and $X_{p2}$ on the pilot part:

$$X_{d2} = E\left\{\left| y_{d2} - \hat{h}_1 d \right|^2\right\} = E\left\{\left| -\varepsilon' d + i_1 + n \right|^2\right\} = \sigma_{\varepsilon'}^2 + \sigma_n^2 + \sigma_{i_1}^2$$

$$X_{p2} = E\left\{\left| y_{p2} - \hat{h}_1 \sqrt{\alpha}\, p \right|^2\right\} = E\left\{\left| -\varepsilon' \sqrt{\alpha}\, p + i_2 + n \right|^2\right\}$$

$$X_{p2} = \alpha\sigma_{\varepsilon'}^2 + \sigma_n^2 + \beta\sigma_{i_2}^2 \geq \alpha\sigma_{\varepsilon'}^2 + \sigma_n^2 + \beta\sigma_{i_1}^2$$

The mobile terminal MT1 is thus also able to estimate $X_{d2}\text{-}X_{p2}$. Theoretically, this value is upper bounded by

$$X_{d2} - X_{p2} \leq -(\alpha-1)\sigma_{\varepsilon'}^2 - (\beta-1)\sigma_{i_2}^2 < -(\alpha-1)\sigma_\varepsilon^2 - (\beta-1)\sigma_{i_1}^2 \leq X_{d1} - X_{p1}$$

When pilot position collision is occurring in the absence of PCI collision, the mobile terminal MT1 experiences an increasing estimated level of interference on both the data part and the pilot part, with a more important increase of estimated level of interference on the pilot part. We can also state that $X_{d2} - X_{p2} + (\alpha-1)\sigma_\varepsilon^2$, that can be computed by the mobile terminal MT1 has a descending trend and mostly negative values.

Let us now consider the mobile terminal MT2 at position B. The mobile terminal MT2 is located in the coverage areas CE1 and CE2. As home base stations HBS1 and HBS2 are synchronized and have the same PCI, PCI collision is occurring. PCI collision in the context of home base station HBS1 approaching the home base station HBS2 is progressive and the importance of the interference increases with the decrease of the relative distance between the two home base stations HBS1 and HBS2. Both pilot positions and pilot values are colliding. At position B, the data and respectively pilot signals received by the mobile terminal MT2 on a resource element, denoted $y_{d3}$ and respectively $y_{p3}$, can be written as follows:

$$y_{d3} = h_1 d + i_1 + n$$

$$y_{p3} = \left( h_1\sqrt{\alpha} + h_2\sqrt{\beta} \right) p + n$$

Based on the received pilot symbol $y_{p3}$, the mobile terminal MT2 estimates the downlink channel with the home base station HBS1 as:

$$\hat{h}_1 = h_1 + \sqrt{\frac{\beta}{\alpha}}h_2 + \varepsilon = h_1 + \sqrt{\gamma}h_2 + \varepsilon$$

The mobile terminal MT2 is able to estimate the level of interference $X_{d3}$ present on the data part and $X_{p3}$ on the pilot part:

$$X_{d3} = E\left\{ \left| y_{d3} - \hat{h}_1 d \right|^2 \right\} = E\left\{ \left| -\left( \varepsilon + \sqrt{\gamma}h_2 \right)d + i_1 + n \right|^2 \right\} = \sigma_\varepsilon^2 + \sigma_n^2 + \sigma_{i_1}^2 + \gamma\sigma_{h_2}^2$$

$$X_{p3} = E\left\{ \left| y_{p3} - \hat{h}_1\sqrt{\alpha}p \right|^2 \right\} = E\left\{ \left| -\varepsilon\sqrt{\alpha}p + n \right|^2 \right\} = \alpha\sigma_\varepsilon^2 + \sigma_n^2$$

The mobile terminal MT2 is thus also able to estimate $X_{d3}\text{-}X_{p3}$.

Theoretically,

$$X_{d3} - X_{p3} = -(\alpha-1)\sigma_\varepsilon^2 + \sigma_{i_1}^2 + \gamma\sigma_{h_2}^2$$

In that case, the mobile terminal MT2 experiences an increasing estimated level of interference on the data part while no significant variation appears on the pilot part when the noise variance does not vary much. We can also

state that $X_{d3} - X_{p3} + (\alpha - 1)\sigma_\varepsilon^2$ that can be computed by the mobile terminal MT2 has an ascending trend and mostly positive values.

Overall,

$$X_{d3} - X_{p3} > X_{d1} - X_{p1} \geq X_{d2} - X_{p2}$$

When PCI collision is occurring, the difference between the level of estimated interference on the data part and the level of estimated interference on the pilot part has an ascending trend and is in average superior to $-(\alpha - 1)\sigma_\varepsilon^2$.

Let us assume that the mobile terminal MT2 at position A receives data from the serving home base station HBS1 and is not able to correctly decode the data. The estimated data symbol is different from the sent data symbol, $\hat{d} \neq d$.

Not correct data decoding can be detected by using for example a cyclic redundancy check (CRC).

At position A, the data and pilot signals received by the mobile terminal MT2 on a resource element, denoted $y_{d4}$ and respectively $y_{p4}$, can be written as follows:

$$y_{d4} = h_1 d + n$$

$$y_{p4} = h_1 \sqrt{\alpha}\, p + n$$

Based on the received pilot symbol $y_{p4}$, the mobile terminal MT2 estimates the downlink channel with the home base station HBS1 as:

$$\hat{h}_1 = h_1 + \varepsilon$$

where the estimation error $\varepsilon$ has a variance $\sigma_\varepsilon^2$ depending on the type of channel estimation implemented at the mobile terminal MT2.

Without loss of generality we can assume that data is normalized to unitary mean power. The mobile terminal MT2 is able to estimate the level of interference $X_{d4}$ present on the data part and $X_{p4}$ on the pilot part:

$$X_{d4} = E\left\{\left|y_{d4} - \hat{h}_1 \hat{d}\right|^2\right\} = \sigma_n^2 + \sigma_{h_1}^2 + \sigma_{\hat{h}_1}^2 + 2E\left\{h_1^* d^* \hat{h}_1 \hat{d}\right\} = \sigma_\varepsilon^2 + \sigma_n^2 + 2\sigma_{h_1}^2$$

$$X_{p4} = E\left\{\left|y_{p4} - \hat{h}_1 \sqrt{\alpha}\, p\right|^2\right\} = E\left\{\left|-\varepsilon \sqrt{\alpha}\, p + n\right|^2\right\} = \alpha\sigma_\varepsilon^2 + \sigma_n^2$$

The mobile terminal MT2 is thus also able to estimate $X_{d4}$-$X_{p4}$. This value is equal to:

$$X_{d4} - X_{p4} = -(\alpha - 1)\sigma_\varepsilon^2 + 2\sigma_{h_1}^2$$

The mobile terminal MT2 experiences stable estimated levels of interference both on the pilot and data part when the noise variance does not vary much. We can also state that $X_{d4} - X_{p4} + (\alpha - 1)\sigma_\varepsilon^2$ that can be computed by the mobile terminal MT2 has a stable trend.

Let us assume that the mobile terminal MT1 at position A receives data from the serving home base station HBS1 and is not able to correctly decode the data. The estimated data symbol is different from the sent data symbol, $\hat{d} \neq d$.

As the mobile terminal MT1 is located in the coverage areas CE1 and CE3, pilot position collision occurs. Since the pilot values on colliding positions are different for the serving home base station HBS1 and the interfering home base station HBS3 this can be seen as a simple interference case.

At position A, the data and respectively pilot signals received by the mobile terminal MT1 on a resource element, denoted $y_{d5}$ and respectively $y_{p5}$, can be written as follows:

$$y_{d5} = h_1 d + i_1 + n$$

$$y_{p5} = h_1 \sqrt{\alpha}\, p + i_2 + n$$

Based on the received pilot symbol $y_{p5}$, the mobile terminal MT1 estimates the downlink channel with the home base station HBS1 as:

$$\hat{h}_1 = h_1 + \varepsilon'$$

where the estimation error $\varepsilon'$ has a variance $\sigma_{\varepsilon'}^2$, depending on the type of channel estimation implemented at the mobile terminal MT1.

The mobile terminal MT1 is able to estimate the level of interference $X_{d5}$ present on the data part and $X_{p5}$ on the pilot part:

$$X_{d5} = E\left\{ \left| y_{d5} - \hat{h}_1 \hat{d} \right|^2 \right\} = \sigma_{\varepsilon'}^2 + \sigma_n^2 + \sigma_{i_1}^2 + 2\sigma_{h_1}^2$$

$$X_{p5} = E\left\{ \left| y_{p5} - \hat{h}_1 \sqrt{\alpha}\, p \right|^2 \right\} = E\left\{ \left| -\varepsilon' \sqrt{\alpha}\, p + i_2 + n \right|^2 \right\}$$

$$X_{p5} = \alpha\sigma_{\varepsilon'}^2 + \sigma_n^2 + \beta\sigma_{i_2}^2 > \alpha\sigma_{\varepsilon}^2 + \sigma_n^2 + \beta\sigma_{i_1}^2$$

The mobile terminal is thus also able to estimate $X_{d5}$-$X_{p5}$. Theoretically, this value is upper bounded by:

$$X_{d5} - X_{p5} = -(\alpha - 1)\sigma_{\varepsilon'}^2 - (\beta - 1)\sigma_{i_2}^2 + 2\sigma_{h_1}^2$$

$$X_{d5} - X_{p5} < -(\alpha - 1)\sigma_{\varepsilon}^2 - (\beta - 1)\sigma_{i_1}^2 + 2\sigma_{h_1}^2 \le X_{d4} - X_{p4}$$

When pilot position collision is occurring in the absence of PCI collision, the mobile terminal MT1 may experience an increasing estimated level of interference on both the data part and the pilot part, with a more important increase of estimated level of interference on the pilot part.

We can also state that $X_{d5} - X_{p5} + (\alpha - 1)\sigma_{\varepsilon'}^2$, that can be computed by the mobile terminal MT1 has a descending trend.

Let us assume that the mobile terminal MT2 at position B receives data from the serving home base station HBS1 and is not able to correctly decode the data. The estimated data symbol is different from the sent data symbol, $\hat{d} \neq d$.

As the mobile terminal MT2 is located in the coverage areas CE1 and CE2, a synchronized interfering home base station HBS2 exists and has the same PCI as the PCI of the serving home base station HBS1. PCI collision is occurring. Both pilot positions and pilot values are colliding.

At position B, the data and respectively pilot signals received by the mobile terminal MT2 on a resource element, denoted $y_{d6}$ and respectively $y_{p6}$, can be written as follows:

$$y_{d6} = h_1 d + i_1 + n$$

$$y_{p6} = \left(h_1\sqrt{\alpha} + h_2\sqrt{\beta}\right)p + n$$

Based on the received pilot symbol $y_{p6}$, the mobile terminal MT2 estimates the downlink channel with the serving home base station HBS1 as:

$$\hat{h}_1 = h_1 + \sqrt{\frac{\beta}{\alpha}}h_2 + \varepsilon = h_1 + \sqrt{\gamma}h_2 + \varepsilon$$

The mobile terminal MT2 is able to estimate the level of interference $X_{d6}$ present on the data part and $X_{p6}$ on the pilot part:

$$X_{d6} = E\left\{\left|y_{d6} - \hat{h}_1\hat{d}\right|^2\right\} = \sigma_\varepsilon^2 + \sigma_n^2 + \sigma_{i_1}^2 + \gamma\sigma_{h_2}^2 + 2\sigma_{h_1}^2$$

$$X_{p6} = E\left\{\left|y_{p6} - \hat{h}_1\sqrt{\alpha}\,p\right|^2\right\} = E\left\{\left|-\varepsilon\sqrt{\alpha}\,p + n\right|^2\right\} = \alpha\sigma_\varepsilon^2 + \sigma_n^2$$

The mobile terminal MT2 is thus also able to estimate $X_{d6}\text{-}X_{p6}$. Theoretically,:

$$X_{d6} - X_{p6} \le -(\alpha - 1)\sigma_\varepsilon^2 + \sigma_{i_1}^2 + \gamma\sigma_{h_2}^2 + 2\sigma_{h_1}^2$$

In the case where PCI collision is occurring, the mobile terminal MT2 experiences an increasing estimated level of interference on the data part, while the estimated level of interference on the pilot part is not significantly impacted when the noise variance does not vary much. We can also state that $X_{d6} - X_{p6} + (\alpha - 1)\sigma_\varepsilon^2$ that can be computed by the mobile terminal MT2 has an ascending trend and mostly positive values.
Overall,

$$\underbrace{X_{d6} - X_{p6}}_{=X_{d3}-X_{p3}+2\sigma_{h_1}^2} > \underbrace{X_{d4} - X_{p4}}_{=X_{d1}-X_{p1}+2\sigma_{h_1}^2} \ge \underbrace{X_{d5} - X_{p5}}_{=X_{d2}-X_{p2}+2\sigma_{h_1}^2}$$

When PCI collision is occurring, the difference between the level of estimated interference on the data part and the level of estimated interference on the pilot part is superior to $-(\alpha - 1)\sigma_\varepsilon^2 + 2\sigma_{h_1}^2$.
According to the invention, the mobile terminal :

- computes a level of estimated interference on data received by the mobile terminal,
- computes a level of estimated interference on pilot symbols received by the mobile terminal,
- determines if the mobile terminal is in at least two coverage areas of at least two home base stations having the same physical cell identity and being synchronized from the computed level of estimated interference on data received by the mobile terminal and from the computed level of estimated interference on pilot symbols received by the mobile terminal.

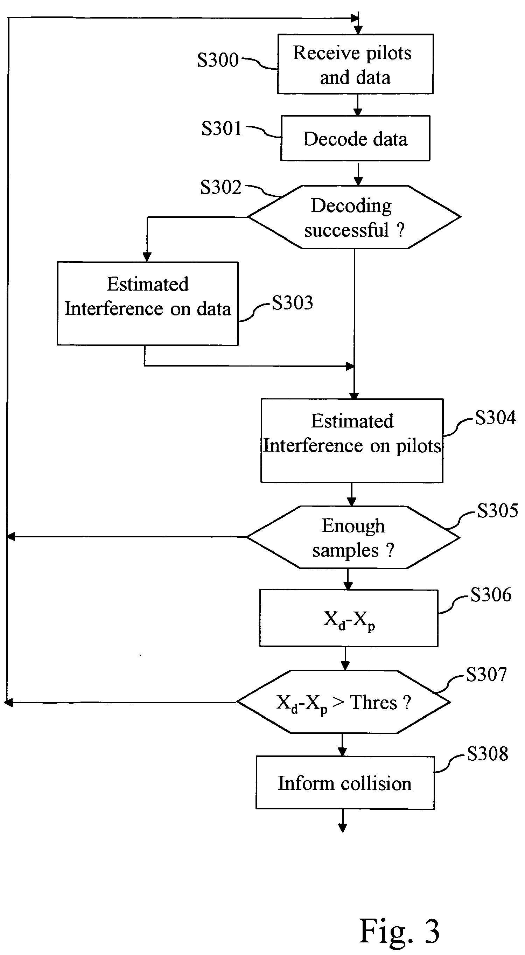

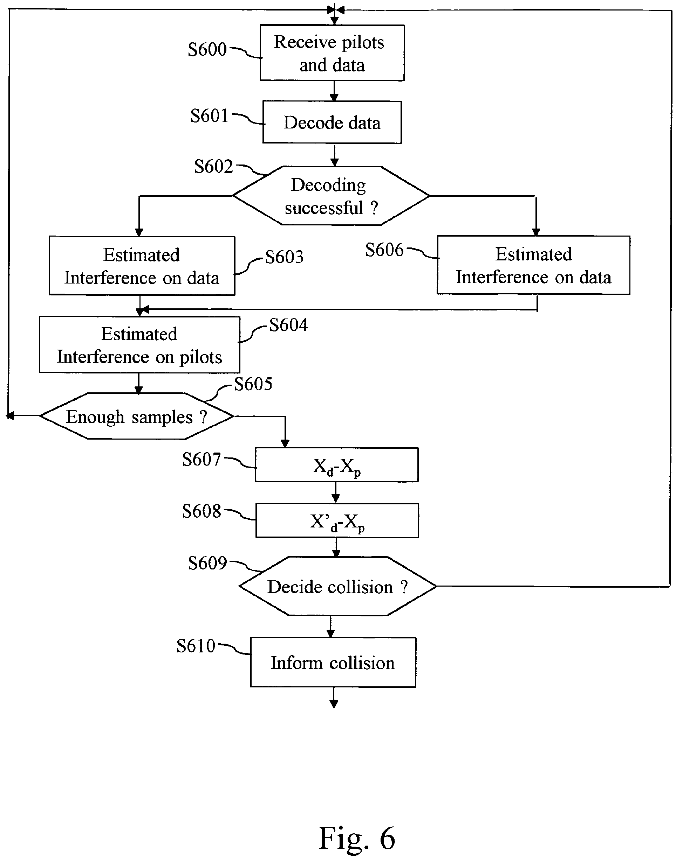

**Fig**. 2 is a diagram representing the architecture of a mobile terminal in which the present invention is implemented.
The mobile terminal MT has, for example, an architecture based on components connected together by a bus 201 and a processor 200 controlled by the program as disclosed in Figs. 3 or 4 or 5 or 6 or 7 or 8.
The bus 201 links the processor 200 to a read only memory ROM 202, a random access memory RAM 203 and a wireless interface 205.

The memory 203 contains registers intended to receive variables and the instructions of the programs related to the algorithms as disclosed in Figs. 3 or 4 or 5 or 6 or 7 or 8.

The processor 200 controls the operation of the wireless interface 205.

The read only memory 202 contains instructions of the programs related to the algorithms as disclosed in Figs. 3 or 4 or 5 or 6 or 7 or 8, which are transferred, when the mobile terminal MT is powered on, to the random access memory 203.

The wireless interface 205 comprises means for receiving signal representative of pilots and data, means for decoding data and CRC check means.

**Fig**. **3** discloses a first example of an algorithm executed by a mobile terminal according to the present invention.

The present algorithm is executed by at least one mobile terminal MT served by a home base station HBS1, HBS2 or HBS3. The at least one mobile terminal MT executes the present algorithm for example upon request of its serving home base station.

More precisely, the present algorithm is executed by the processor 200 of the mobile terminal MT.

At step S300, the processor 200 detects the reception of pilots and data through the wireless interface 205.

At next step S301, the processor 200 commands the wireless interface in order to decode the data.

At next step S302, the processor 200 checks if correct data decoding is performed by using for example a cyclic redundancy check.

If data are correctly decoded, the processor 200 moves to step S303. Otherwise, the processor 200 moves to step S304.

At step S303, the processor 200 computes the level of estimated interference on the data part. The level of estimated interference on the data part is performed by evaluating the average value of the square difference between the received noisy and/or interfered data symbol $y_d$ and the estimated data symbol affected by the estimated channel $\hat{h}_1 \hat{d}$.

$$X_d = E\left\{ \left| y_d - \hat{h}_1 \hat{d} \right|^2 \right\} \Bigg|_{d=\hat{d}}$$

In a variant, this value may be computed by averaging over several decoded frames.

At each correctly decoded frame, information representative of the level of interference experienced on the data part is stored, and averaging is made by also taking into account the information relative to the previously correctly decoded frames. Averaging can be done in many ways, for example by using a fixed window, a sliding window, weighted averaging, etc...

Alternatively, at this step, only information representative of the level of interference experienced on the data part is stored, and all averaging computations are transferred at step S306.

After that the processor 200 moves to step S304.

At step S304, the processor 200 computes the level of estimated interference on the pilots. The level of estimated interference on the pilots is performed by evaluating the average value of the square difference between the noisy and/or interfered received pilot symbol $y_p$ and the sent boosted pilot symbol affected by the estimated channel $\bar{\hat{h}}_1 \sqrt{\alpha}\, p$.

$$X_p = E\left\{ \left| y_p - \hat{h}_1 \sqrt{\alpha}\, p \right|^2 \right\}$$

In a variant, this value may be computed by averaging over several decoded frames. At each decoded frame, information representative of the level of interference experienced on the pilot part is stored, and averaging is made by also taking into account the information relative to the previously decoded frames. $X_p$ can be computed by averaging over correctly and incorrectly decoded frames.

Alternatively, at this step, only information representative of the level of interference experienced on the pilot part is stored, and all averaging computations are reported at step S306.

In a variant of realization, the processor 200, instead of moving from step S302 to S304 if data are not correctly decoded, moves from step S302 to S305, i.e. information representative of the level of interference experienced only on the pilot part of correctly decoded frames is computed. Averaging can be made by also taking into account the information representative of the level of interference experienced on the pilot part of previously correctly decoded frames. Alternatively, at this step, only information representative of the level of interference experienced on the pilot part only in the case of correct decoding is stored, and all averaging computations are reported at step S306.

At next step S305, the processor 200 checks if enough samples have been taken for the average computing.

Averaging is done over time/frequency periods capable of giving sufficiently reliable statistics but without penalizing the decision time. These periods should be long enough to give reliable statistics, for example be at least within the order of the coherence time/coherence bandwidth of the channel. These periods should be short enough in order to allow fast reaction from the mobile terminal MT when the channel conditions are changing.

Coherence time / coherence bandwidth are statistical measures that describe the time / frequency varying nature of the channel in a small scale region. Coherence time is a statistical measure of the time duration over which the channel impulse response is essentially invariant. Coherence bandwidth is the range of frequencies over which two frequency components have a strong potential for amplitude correlation. These measures are well described in the literature for example in the book of Theodore S. Rappaport, entitled Wireless communications-Principles and practice.

If enough samples have been taken for a reliable average computing, the processor 200 moves to step S306. Otherwise, the processor 200 returns to step S300.

At next step S306, the processor 200 computes $X_d$, $Xp$ if they were not previously calculated, and then computes the difference $X_d$-$X_p$ between the level of estimated interference on the data part when correct detection was achieved, $X_d$, and the level of estimated interference on the pilot part, $X_p$.

At next step S307, the processor 20 checks if the calculated value $X_d$ -$X_p$ is upper than a given threshold Thres.

The threshold Thres is for example determined through simulation or empirical measurements. For example, the threshold Thres is determined in order to have a certain target missed detection probability.

The threshold Thres is for example determined based on the analytical value $-(\alpha - 1)\sigma_\varepsilon^2$ majored by a margin. The margin is fixed so as to have a certain target missed detection probability. The margin should be small enough in order for the threshold value to remain inferior to $X_{d3}$-$X_{p3}$ i.e. a margin inferior to $\sigma_{i_1}^2 + \gamma \sigma_{h_2}^2$ . The margin is for example determined through simulation or empirical measurements or determined so as to detect PCI collision with a strong enough channel.

For example, if the value $\sigma_{h_1}^2$ is either estimated or previously known by the MT, the threshold can be set to

$-(\alpha - 1)\sigma_\varepsilon^2 + k\sigma_{h_1}^2$ where $k$ is a positive variable.

If $k$=1 for example, the mobile terminal MT is able to detect PCI collision with an interfering home base station HBS when the interfering channel is at least as strong as the useful channel.

If $k$=0.5 for example, the mobile terminal MT is able to detect PCI collision with an interfering home base station HBS when the interfering channel is at least half as strong as the useful channel.

If the calculated value $X_d$-$X_p$ is upper than the threshold Thres, the processor 200 moves to step S308. Otherwise, the processor 200 returns to step S300.

At next step S308, the processor 200 commands the wireless interface 205 in order to transfer a message to the home base station HBS the mobile terminal MT is attached to notifying that a PCI collision is detected.

After that, the processor 200 returns to step S300.

**Fig**. **4** discloses a second example of an algorithm executed by a mobile terminal according to the present invention.

The present algorithm is executed by at least one mobile terminal MT served by a home base station HBS1, HBS2 or HBS3. The at least one mobile terminal MT executes the present algorithm for example upon request of its serving home base station.

More precisely, the present algorithm is executed by the processor 200 of the mobile terminal MT.

At step S400, the processor 200 detects the reception of pilots and data through the wireless interface 205.

At next step S401, the processor 200 commands the wireless interface 205 in order to decode the data.

At next step S402, the processor 200 checks if correct data decoding is performed by using for example a cyclic redundancy check.

If data are not correctly decoded, the processor 200 moves to step S403. Otherwise, the processor 200 moves to step S404.

At step S403, the processor 200 computes the level of estimated interference on the data part. The level of estimated interference on the data part is performed by evaluating the average value of the square difference between the received noisy and/or interfered data symbol $y_d$ and the estimated data symbol affected by the estimated channel $\hat{h}_1\hat{d}$.

$$X'_d = E\left\{\left|y_d - \hat{h}_1\hat{d}\right|^2\right\}\bigg|_{d \neq \hat{d}}$$

In a variant, this value may be computed by averaging over several frames. At each unsuccessfully decoded frame, information representative of the level of interference experienced on the data part is stored, and averaging is made by also taking into account the information relative to the previously unsuccessfully decoded frames. Averaging can be done in many ways, for example by using a fixed window, a sliding window, weighted averaging, etc...

Alternatively, at this step, only information representative of the level of interference experienced on the data part is stored, and all averaging computations are transferred at step S406.

After that the processor 200 moves to step S404.

At step S404, the processor 200 computes the level of estimated interference on the pilots. The level of estimated interference on the pilots is performed by evaluating the average value of the square difference between the noisy and/or interfered received pilot symbol $y_p$ and the sent boosted pilot symbol affected by the estimated channel $\hat{h}_1 \sqrt{\alpha} \, p$.

$$X_p = E\left\{ \left| y_p - \hat{h}_1 \sqrt{\alpha} \, p \right|^2 \right\}$$

In a variant, this value may be computed by averaging over several decoded frames. At each decoded frame, information representative of the level of interference experienced on the pilot part is stored, and averaging is made by also taking into account the information relative to the previously decoded frames. $Xp$ can be computed by averaging over correctly and incorrectly decoded frames.

Alternatively, at this step, only information representative of the level of interference experienced on the pilot part is stored, and all averaging computations are reported at step S306.

In a variant of realization, the processor 200, instead of moving from step S402 to S404 if data are correctly decoded, moves from step S402 to S405, i.e. information representative of the level of interference experienced on the pilot part of not correctly decoded frames is computed. Averaging can be made by also taking into account the information representative of the level of interference experienced on the pilot part of previously not correctly decoded frames.

Alternatively, at this step, only information representative of the level of interference experienced on the pilot part only in the case of not correctly decoded frames is stored, and all averaging computations are reported at step S406.

At next step S405, the processor 200 checks if enough samples have been taken for the average computing.

Averaging is done over time/frequency periods capable of giving sufficiently reliable statistics but without penalizing the decision time as disclosed as step S305 of the algorithm disclosed at Fig. 3.

If enough samples have been taken for the average computing, the processor 200 moves to step S406. Otherwise, the processor 200 returns to step S400.

At next step S406, the processor 200 computes $X'_d$, $Xp$ if they were not previously calculated, and then computes the difference $X'_d\text{-}X_p$ between the level of estimated interference on the data part when correct detection was not achieved, $X'_d$, and the level of estimated interference on the pilot part, $X_p$.

At next step S407, the processor 200 checks if the calculated value $X'_d\text{-}X_p$ is upper than a given threshold Thresf.

The threshold Thresf is the threshold Thres as disclosed at step S305 of the algorithm of Fig. 3 majored by $2\sigma^2_{h_1}$. The value of $\sigma^2_{h_1}$ can be either communicated to the mobile terminal MT by the serving home base station HBS, for example based on the estimation of the reciprocal channel at the home base station HBS when channel reciprocity exists, for example in time division duplex systems.

The value $\sigma^2_{h_1}$ can be computed by the mobile terminal MT in a manner that would avoid false estimation when PCI collision is occurring, for example not directly based on the channel estimates that may be false during PCI collision.

The value of $\sigma^2_{h_1}$ can be computed by the mobile terminal MT by data aided estimation when the data was correctly decoded.

If the calculated value $X'_d\text{-}X_p$ is upper than the threshold Thresf, the processor 200 moves to step S408. Otherwise, the processor 200 returns to step S400.

At next step S408, the processor 200 commands the wireless interface 205 in order to transfer a message to the serving home base station HBS notifying that a PCI collision is detected.

After that, the processor 200 returns to step S400.

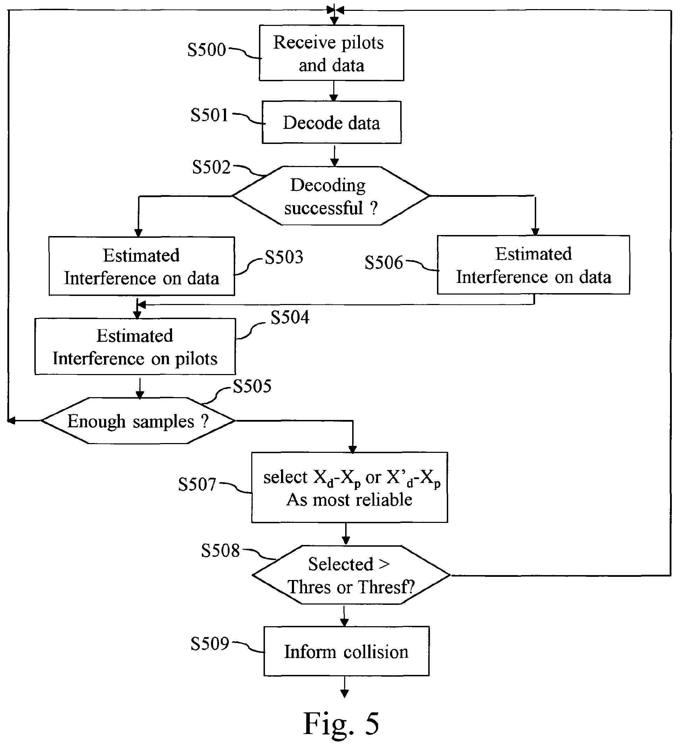

**Fig. 5** discloses a third example of an algorithm executed by a mobile terminal according to the present invention.

The present algorithm is executed by at least one mobile terminal MT served by a home base station HBS1, HBS2 or HBS3. The at least one mobile terminal MT executes the present algorithm for example upon request of its serving home base station.

More precisely, the present algorithm is executed by the processor 200 of the mobile terminal MT.

At step S500, the processor 200 detects the reception of pilots and data through the wireless interface 205.

At next step S501, the processor 200 commands the wireless interface 205 in order to decode the data.

At next step S502, the processor 200 checks if correct data decoding is performed by using for example a cyclic redundancy check.

If data are correctly decoded, the processor 200 moves to step S503. Otherwise, the processor 200 moves to step S506.

At step S503, the processor 200 computes the level of estimated interference on the data part as disclosed at step S303. The level of estimated interference on the data part is performed by evaluating the average value of the square difference between the received noisy and/or interfered data symbol $y_d$ and the estimated data symbol affected by the estimated channel $\hat{h}_1\hat{d}$.

After that the processor 200 moves to step S504.

At next step S504, the processor 200 computes the level of estimated interference on the pilots. The level of estimated interference on the pilots is performed by evaluating the average value of the square difference between the noisy and/or interfered received pilot symbol $y_p$ and the sent boosted pilot symbol affected by the estimated channel $\hat{h}_1\sqrt{\alpha}\,p$.

In a variant, this value may be computed by averaging over several decoded frames. At each decoded frame, information representative of the level of interference experienced on the pilot part is stored, and averaging is made by also taking into account the information relative to the previously decoded frames. $Xp$ can be computed by averaging over correctly and incorrectly decoded frames.

In a variant of realization, information representative of a first level of estimated interference only on the pilot part of correctly decoded frames is computed. Averaging can be made by also taking into account the information representative of the level of interference experienced on the pilot part of previously correctly decoded frames. Information representative of a second level of estimated interference only on the pilot part of not correctly decoded frames is computed. Averaging can be made by also taking into account the information representative of the level of interference experienced on the pilot part of previously not correctly decoded frames.

At next step S505, the processor 200 checks if enough samples have been taken for the average computing.

Averaging is done over time/frequency periods capable of giving sufficiently reliable statistics but without penalizing the decision time as disclosed at step S305 of the algorithm disclosed at Fig. 3.

If enough samples have been taken for the average computing, the processor 200 moves to step S507. Otherwise, the processor 200 returns to step S500.

At step S506, the processor 200 computes, as disclosed at step S403, the level of estimated interference on the data part. The level of estimated interference on the data part is performed by evaluating the average value of the square difference between the received noisy and/or interfered data symbol $y_d$ and the estimated data symbol affected by the estimated channel $\hat{h}_1\hat{d}$.

After that, the processor 200 moves to step S507.

At step S507, the processor 200 computes $X_d$, $X'_d$, $X_p$ if they were not previously calculated, selects and computes one of the differences $X_d$-$X_p$ and $X'_d - X_p$ as the most reliable of the two measures, for example, the one where the average values are computed taken into account more decoding events i.e. $X_d$-$X_p$ or $X'_d - \tilde{X}_p$.

If two levels of estimated interference on the pilots are computed, the processor 200 subtracts to $X_d$ the first level of estimated interference on the pilots of correctly decoded frames or subtracts to X'$_d$ the second level of estimated interference on the pilots of not correctly decoded frames.

At step S508, the processor 200 checks if the selected difference is upper than the threshold Thres or Thresf according to the selected difference.

If the selected difference is $X_d$-$X_p$ or is $X_d$ minus the first level of estimated interference on the pilots and is upper than the threshold Thres as disclosed at step S307 of the algorithm of Fig. 3, the processor 200 moves to step S509. Otherwise, the processor 200 returns to step S500.

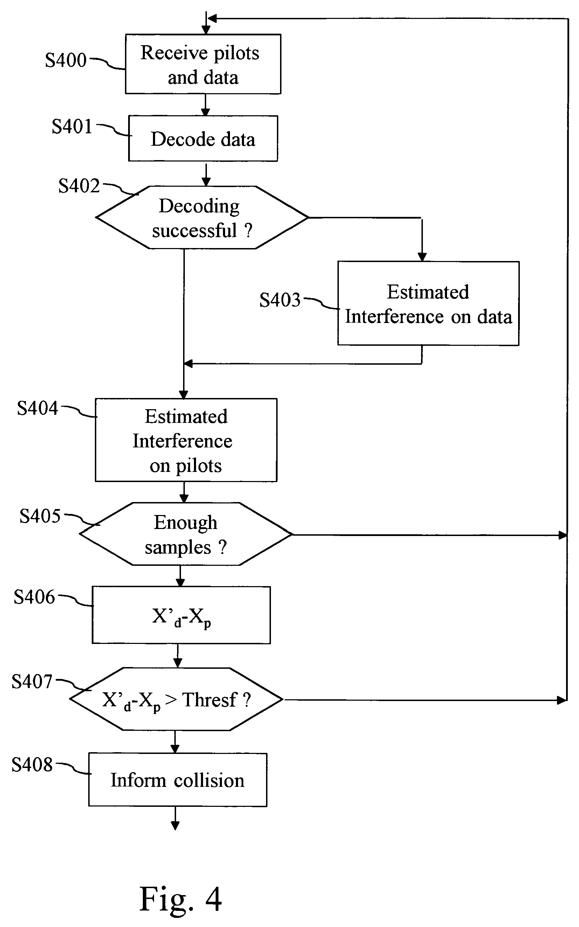

If the selected difference is $X'_d - X_p$ or is X'$_d$ minus the second level of estimated interference on the pilots and is upper than the threshold Thresf as disclosed at step S407 of the algorithm of Fig. 4, the processor 200 moves to step S509. Otherwise, the processor 200 returns to step S500.

At step S511, the processor 200 commands the wireless interface 205 in order to transfer a message to the serving home base station HBS notifying that a PCI collision is detected.

After that, the processor 200 returns to step S500.

**Fig**. **6** discloses a fourth example of an algorithm executed by a mobile terminal according to the present invention.

The present algorithm is executed by at least one mobile terminal MT served by a home base station HBS1, HBS2 or HBS3. The at least one mobile terminal MT executes the present algorithm for example upon request of its serving home base station.

More precisely, the present algorithm is executed by the processor 200 of the mobile terminal MT.

At step S600, the processor 200 detects the reception of pilots and data through the wireless interface 205.

At next step S601, the processor 200 commands the wireless interface 205 in order to decode the data.

At next step S602, the processor 200 checks if correct data decoding is performed by using for example a cyclic redundancy check.

If data are correctly decoded, the processor 200 moves to step S603. Otherwise, the processor 200 moves to step S606.

At step S603, the processor 200 computes the level of estimated interference on the data part as disclosed at step S303. The level of estimated interference on the data part is performed by evaluating the average value of the square difference between the received noisy and/or interfered data symbol $y_d$ and the estimated data symbol affected by the estimated channel $\hat{h}_1\hat{d}$.

At next step S604, the processor 200 computes the level of estimated interference on the pilots. The level of estimated interference on the pilots is performed by evaluating the average value of the square difference between the noisy and/or interfered received pilot symbol $y_p$ and the sent boosted pilot symbol affected by the estimated channel

$$\hat{h}_1\sqrt{\alpha}\,p.$$

In a variant, this value may be computed by averaging over several decoded frames. At each decoded frame, information representative of the level of interference experienced on the pilot part is stored, and averaging is made by also taking into account the information relative to the previously decoded frames. $X_p$ can be computed by averaging over correctly and incorrectly decoded frames.

In a variant of realization, information representative of a first level of estimated interference only on the pilot part of correctly decoded frames is computed. Averaging can be made by also taking into account the information representative of the level of interference experienced on the pilot part of previously correctly decoded frames. Information representative of a second level of estimated interference only on the pilot part of not correctly decoded frames is computed. Averaging can be made by also taking into account the information representative of the level of interference experienced on the pilot part of previously not correctly decoded frames.

At next step S605, the processor 200 checks if enough samples have been taken for the average computing.

Averaging is done over time/frequency periods capable of giving sufficiently reliable statistics but without penalizing the decision time as disclosed as step S305 of the algorithm disclosed at Fig. 3.

If enough samples have been taken for the average computing, the processor 200 moves to step S607. Otherwise, the processor 200 returns to step S600.

At step S606, the processor 200 computes the level of estimated interference on the data part as disclosed at step S403. The level of estimated interference on the data part is performed by evaluating the average value of the square difference between the received noisy and/or interfered data symbol $y_d$ and the estimated data symbol affected by the estimated channel $\hat{h}_1\hat{d}$.

After that, the processor 200 moves to step S604, executes the steps S604 and S605 as already disclosed and returns to step S600 or moves to step S607 according to the result of the test S605.

At step S607, the processor 200 computes $X_d$, $X_p$ if they were not previously calculated. The processor 200 computes also the difference $X_d$-$X_p$ between the level of estimated interference on the data part when correct detection was achieved, $X_d$, and the level of estimated interference on the pilot part, $X_p$.

If two levels of estimated interference on the pilots are computed, the processor 200 subtracts to $X_d$ the first level of estimated interference on the pilots.

At next step S608, the processor 200 computes $X'_d$, $X_p$ if they were not previously calculated. The processor 200 computes also the difference $X'_d$-$X_p$ between the level of estimated interference on the data part when correct detection was not achieved, $X'_d$, and the level of estimated interference on the pilot part, $X_p$.

If two levels of estimated interference on the pilots are computed, the processor 200 subtracts to $X'_d$ the second level of estimated interference on the pilots.

At next step S609, the processor 200 decides if a PCI collision occurs.

The processor 200 checks if the calculated value $X_d$ -$X_p$ or if $X_d$ minus the first level of estimated interference on the pilots is upper than the given threshold Thres and if the calculated value $X'_d$-$X_p$ or if $X'_d$ minus the first level of estimated interference on the pilots is upper than the given threshold Thresf.

The threshold Thres is as disclosed at step S307 of Fig. 3 and the threshold Thesf is as disclosed at step S407 of Fig. 4.

If the calculated value $X_d$-$X_p$ or if $X_d$ minus the first level of estimated interference on the pilots is upper than the threshold Thres and if the calculated value $X'_d$-$X_p$ or if $X'_d$ minus the first level of estimated interference on the pilots is upper than the given threshold Thresf, the processor 200 moves to step S610. Otherwise, the processor 200 returns to step S600.

In a variant, the value of $\sigma_{h_1}^2$ can be computed by the mobile terminal MT in a manner that would avoid false estimation when PCI collision is occurring, not directly based on the channel estimates that may be false during PCI collision, by evaluating $\left(X'_d - X_p\right) - \left(X_d - X_p\right) = 2\sigma_{h_1}^2$.

In a variant of realization, the processor 200 may compute a corrected average value as $\left(X_d - X_p\right)\Big|_{\text{corrected}} = \left(a\left(X_d - X_p\right) + b\left(X'_d - X_p - 2\sigma_{h_1}^2\right)\right)/\left(a + b\right)$ where a and b are respectively the number of events of correct decoding and the number of events of false decoding used for the estimation of $X_d$-$X_p$ and $X'_d - X_p$ and the processor 200 compares $(X_d$-$X_p)|_{\text{corrected}}$ instead of $X_d$-$X_p$. $\sigma_{h_1}^2$ is either known or computed as previously disclosed.

The processor compares then $(X_d$-$X_p)|_{\text{corrected}}$ to the threshold Thres.

At step S610, the processor 200 commands the wireless interface 205 in order to transfer a message to the serving home base station HBS notifying that a PCI collision is detected.

**Fig**. 7 discloses a fifth example of an algorithm executed by a mobile terminal according to the present invention.

The present algorithm is executed by at least one mobile terminal MT served by a home base station HBS1, HBS2 or HBS3. The at least one mobile terminal MT executes the present algorithm for example upon request of its serving home base station.

More precisely, the present algorithm is executed by the processor 200 of the mobile terminal MT.

At step S700, the processor 200 detects the reception of pilots and data through the wireless interface 205.

At next step S701, the processor 200 commands the wireless interface 205 in order to decode the data.

At next step S702, the processor 200 checks if correct data decoding is performed by using for example a cyclic redundancy check.

If data are correctly decoded, the processor 200 moves to step S703. Otherwise, the processor 200 moves to step S704.

At step S703, the processor 200 computes the level of estimated interference on the data part as disclosed at step S303. The level of estimated interference on the data part is performed by evaluating the average value of the square difference between the received noisy and/or interfered data symbol $y_d$ and the estimated data symbol affected by the estimated channel $\hat{h}_1\hat{d}$.

After that, the processor 200 moves to step S704.

At step S704, the processor 200 computes the level of estimated interference on the pilots as disclosed at step S304. The level of estimated interference on the pilots is performed by evaluating the average value of the square difference between the noisy and/or interfered received pilot symbol $y_p$ and the sent boosted pilot symbol affected by the estimated channel $\bar{\hat{h}}_1\sqrt{\alpha}\,\bar{p}$.

In a variant of realization, the processor 200, instead of moving from step S702 to S704 if data are not correctly decoded, moves from step S702 to S705, i.e. information representative of the level of interference experienced only on the pilot part of correctly decoded frames is computed. Averaging can be made by also taking into account the information representative of the level of interference experienced on the pilot part of previously correctly decoded frames. Alternatively, at this step, only information representative of the level of interference experienced on the pilot part only in the case of correct decoding is stored, and all averaging computations are reported at step S706.

At next step S705, the processor 200 checks if enough samples have been taken for the average computing.

Averaging is done over time/frequency periods capable of giving sufficiently reliable statistics as disclosed at step S305 of the algorithm disclosed in Fig. 3.

If enough samples have been taken for the average computing, the processor 200 moves to step S706. Otherwise, the processor 200 returns to step S700.

At next step S706, the processor 200 computes $X_d$, $X_p$ if they were not previously calculated, and evaluates the evolution of the estimated values for $X_d$ and $X_p$. Indeed, when PCI collision is occurring, the estimated level of interference on the data part is increasing, while the estimated level of interference on the pilot part is not.

At next step S707, the processor 200 decides if a PCI collision occurs based on the evaluation performed at step S706.

If a PCI collision occurs, the processor 200 moves to step S708. Otherwise, the processor 200 returns to step S700.

At next step S708, the processor 200 commands the wireless interface 205 in order to transfer a message to the serving home base station HBS notifying that a PCI collision is detected.

After that, the processor 200 returns to step S700.

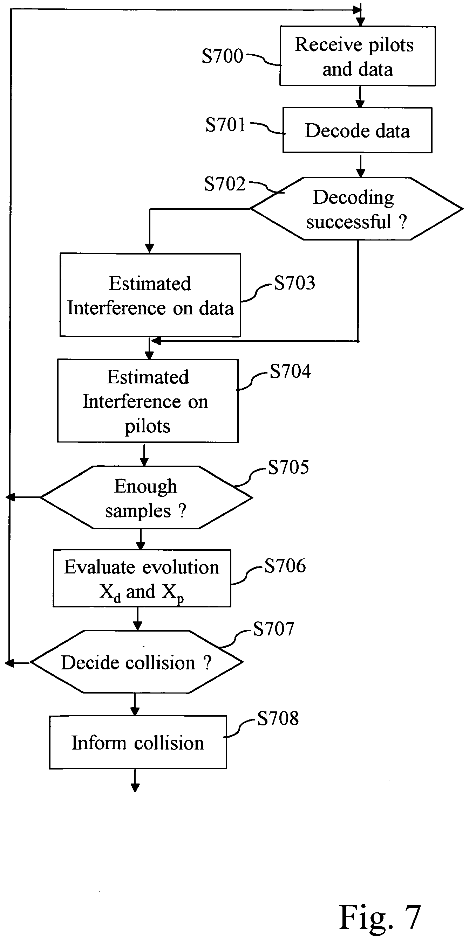

It has to be noted here that the algorithm of Fig. 7 is disclosed in an example wherein PCI collision detection is performed on correct decoded data. The same algorithm is also applicable for not correctly decoded data or for a combination of correctly decoded and not correctly decoded data.

**Fig**. **8** discloses a sixth example of an algorithm executed by a mobile terminal according to the present invention.

The present algorithm is executed by at least one mobile terminal MT served by a home base station HBS1, HBS2 or HBS3. The at least one mobile terminal MT executes the present algorithm for example upon request of its serving home base station.

More precisely, the present algorithm is executed by the processor 200 of the mobile terminal MT.

At step S800, the processor 200 detects the reception of pilots and data through the wireless interface 205.

At next step S801, the processor 200 commands the wireless interface in order to decode the data.

At next step S802, the processor 200 checks if correct data decoding is performed by using for example a cyclic redundancy check.

If data are correctly decoded, the processor 200 moves to step S803. Otherwise, the processor 200 moves to step S804.

At step S803, the processor 200 computes the level of estimated interference on the data part as disclosed at step S303. The level of estimated interference on the data part is performed by evaluating the average value of the square difference between the received noisy and/or interfered data symbol $y_d$ and the estimated data symbol affected by the estimated channel $\hat{h}_1\hat{d}$.

After that, the processor 200 moves to step S804.

At next step S804, the processor 200 computes the level of estimated interference on the pilots as disclosed at step S304. The level of estimated interference on the pilots is performed by evaluating the average value of the square difference between the noisy and/or interfered received pilot symbol $y_p$ and the sent boosted pilot symbol affected by the estimated channel $\hat{h}_1\sqrt{\alpha}\,p$.

In a variant of realization, the processor 200, instead of moving from step S802 to S804 if data are not correctly decoded, moves from step S802 to S805, i.e. information representative of the level of interference experienced only on the pilot part of correctly decoded frames is computed. Averaging can be made by also taking into account the information representative of the level of interference experienced on the pilot part of previously correctly decoded frames. Alternatively, at this step, only information representative of the level of interference experienced on the pilot part only in the case of correct decoding is stored, and all averaging computations are reported at step S806.

At next step S805, the processor 200 checks if enough samples have been taken for the average computing.

Averaging is done over time/frequency periods capable of giving sufficiently reliable statistics as disclosed at step S305 of the algorithm disclosed in Fig. 3.

If enough samples have been taken for the average computing, the processor 200 moves to step S806. Otherwise, the processor 200 returns to step S800.

At next step S806, the processor 200 computes $X_d$, $X_p$ if they were not previously calculated, and computes

$$X_d - X_p + (\alpha - 1)\sigma_\varepsilon^2$$

At next step S807, the processor 200 decides if a PCI collision occurs based on the ascending trend of the value calculated at step S806, in conjunction with a threshold Thres'. For example, PCI collision is detected when $X_d - X_p + (\alpha - 1)\sigma_\varepsilon^2$ has an ascending trend and is superior to the threshold Thres'. The threshold Thres' can be determined in several manners.

For example, the threshold Thres' is determined through simulation or empirical measurements.

For example, the threshold Thres' is determined so as to detect PCI collision with a strong enough channel. For example, the threshold can be set to $k\sigma_{h_1}^2$ where $k$ is a positive variable. If $k$=1 for example, the UE is able to detect PCI collision with an interfering HeNB when the interfering channel is at least as strong as the useful channel. If $k$=0.5 for example, the UE is able to detect PCI collision with an interfering HeNB when the interfering channel is at least half as strong as the useful channel.

If a PCI collision occurs, the processor 200 moves to step S808. Otherwise, the processor 200 returns to step S800.

At next step S808, the processor 200 commands the wireless interface 205 in order to transfer a message to the serving home base station HBS notifying that a PCI collision is detected.

After that, the processor 200 returns to step S800.

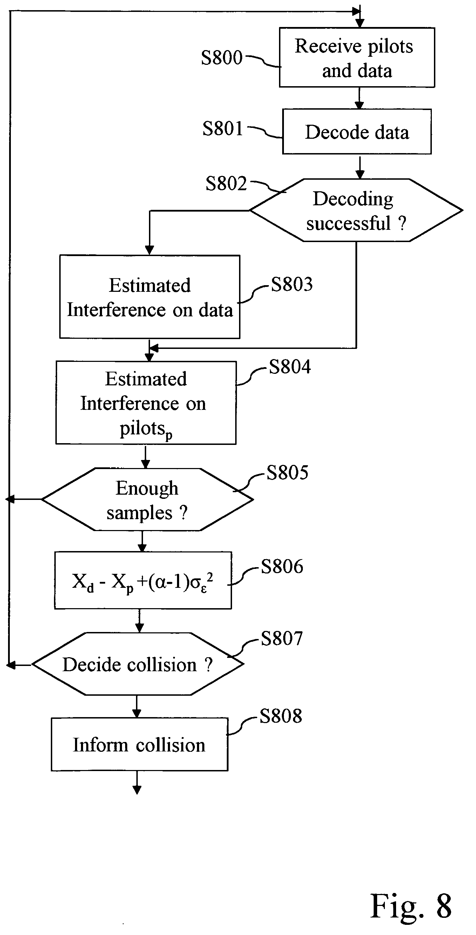

It has to be noted here that the algorithm of Fig. 8 is disclosed in an example wherein PCI collision detection is performed on correct decoded data. The same algorithm is also applicable for not correctly decoded data or for a combination of correctly decoded and not correctly decoded data.

Naturally, many modifications can be made to the embodiments of the invention described above without departing from the scope of the present invention.

**Claims**

1. Method for detecting if a mobile terminal is in at least two coverage areas of at least two home base stations having the same physical cell identity and being synchronized, one of the home base stations serving the mobile terminal and transferring to the mobile terminal data and pilot symbols, at least one of the home base stations changing its location, **characterized in that** the method is executed by the mobile terminal and comprises the steps of:

   - estimating the downlink channel based on received pilot symbols,
   - computing (S303) a level of estimated interference on data received by the mobile terminal using the estimated downlink channel,
   - computing (S304) a level of estimated interference on pilot symbols received by the mobile terminal using the estimated downlink channel,
   - determining (S307) if the mobile terminal is in at least two coverage areas of at least two home base stations having the same physical cell identity and being synchronized from the computed level of estimated interference on data received by the mobile terminal and from the computed level of estimated interference on pilot symbols received by the mobile terminal and by subtracting the level of estimated interference on pilot symbols received by the mobile terminal from the level of estimated interference on data received by the mobile terminal.

2. Method according to claim 1, **characterized in that** the level of estimated interference on pilot symbols received by the mobile terminal is computed on frames of data successfully decoded and/or on frames of data not successfully decoded.

3. Method according to claim 1 or 2, **characterized in that** the level of estimated interference on data received by the mobile terminal is computed on frames of data successfully decoded and/or on frames of data not successfully decoded.

4. Method according to claim 1 or 3, **characterized in that** one level of estimated interference on data received by the mobile terminal is computed on frames where data is successfully decoded and one level of estimated interference on data symbols received by the mobile terminal is computed on frames where data is not successfully decoded and **in that** the method comprises further step of selecting one of the levels of estimated interference on data received by the mobile terminal.

5. Method according to claim 4, **characterized in that** the selected level of estimated interference on data received by the mobile terminal is the one which is the most reliable.

6. Method according to claim 1, **characterized in that** the method comprises further step of comparing the result of the subtracting to a threshold.

7. Method according to claim 1, **characterized in that** the determination if the mobile terminal is in at least two coverage areas of at least two home base stations having the same physical cell identity and being synchronized comprises a step of calculating an information from the computed level of estimated interference on data received by the mobile terminal, from the computed level of estimated interference on pilot symbols received by the mobile terminal, from a power factor applied on pilot symbols transferred by the home base station serving the mobile terminal and from a variance of an estimation error on the channel between the serving home base station and the mobile terminal.

8. Method according to claim 1, **characterized in that** the determination if the mobile terminal is in at least two coverage areas of at least two home base stations having the same physical cell identity and being synchronized comprises a step of calculating an information from the computed level of estimated interference on data received by the mobile terminal, from the computed level of estimated interference on pilot symbols received by the mobile terminal, from the number of frames of data successfully decoded and from the number of frames of data unsuccessfully decoded.

9. Method according to claim 8, **characterized in that** the calculated information $(X_d\text{-}X_p)|_{corrected}$ is calculated according to the following formula: $\left(X_d - X_p\right)\Big|_{corrected} = \left(a\left(X_d - X_p\right) + b\left(X_d' - X_p - 2\sigma_{h_1}^2\right)\right)/\left(a+b\right)$ where $a$ is the number of frames of data successfully decoded, $b$ is the number of frames of data unsuccessfully decoded, $X_p$ is the level of estimated interference on pilot symbols received by the mobile terminal, $X_d$ is the level of estimated interference on data received by the mobile terminal computed on frames of data successfully decoded, $X_d'$ is the level of estimated interference on data received by the mobile terminal computed on frames of data unsuccessfully decoded and $2\sigma_{h_1}^2$ is the variance of the estimate of the channel between the mobile terminal and the home base station serving the mobile terminal.

10. Method according to any of the claims 7 to 9, **characterized in that** the calculated information is compared to a threshold.

11. Method according to any of the claims 1 to 10, **characterized in that** the determination if the mobile terminal is in at least two coverage areas of at least two home base stations having the same physical cell identity and being synchronized is performed from the evolution of computed level of estimated interference on data received by the mobile terminal and from the evolution of the computed level of estimated interference on pilot symbols received by the mobile terminal.

12. Device for detecting if a mobile terminal is in at least two coverage areas of at least two home base stations having the same physical cell identity and being synchronized, one of the home base stations serving the mobile terminal and transferring to the mobile terminal data and pilot symbols, at least one of the home base stations changing its location, **characterized in that** the device for detecting is included in the mobile terminal and comprises:

    - means for estimating the downlink channel based on received pilot symbols
    - means for computing a level of estimated interference on data received by the mobile terminal using the estimated downlink channel,
    - means for computing a level of estimated interference on pilot symbols received by the mobile terminal using the estimated downlink channel,
    - means for determining if the mobile terminal is in at least two coverage areas of at least two home base stations having the same physical cell identity and being synchronized from the computed level of estimated interference on data received by the mobile terminal and from the computed level of estimated interference on pilot symbols received by the mobile terminal and by subtracting the level of estimated interference on pilot symbols received by the mobile terminal from the level of estimated interference on data received by the mobile terminal.

13. Computer program which can be directly loadable into a programmable device, comprising instructions or portions of code for implementing the steps of the method according to claims 1 to 11, when said computer program is executed on a programmable device.

**Patentansprüche**

1. Verfahren zum Erkennen, ob ein mobiles Endgerät in wenigstens zwei Versorgungsgebieten von wenigstens zwei Heim-Basisstationen ist, die dieselbe physikalische Zellenidentität haben und synchronisiert sind, wobei eine der Heim-Basisstationen das mobile Endgerät bedient und Daten und Pilotsymbole zum mobilen Endgerät transferiert, wobei wenigstens eine der Heim-Basisstationen ihren Standort ändert, **dadurch gekennzeichnet, dass** das Verfahren durch das mobile Endgerät ausgeführt wird und die folgenden Schritte aufweist:

    - Schätzen des Abwärtsstreckenkanals basierend auf empfangenen Pilotsymbolen,
    - Berechnen (S303) eines Pegels einer geschätzten Interferenz an durch das mobile Endgerät empfangenen Daten unter Verwendung des geschätzten Abwärtsstreckenkanals,
    - Berechnen (S304) eines Pegels einer geschätzten Interferenz an durch das mobile Endgerät empfangenen Pilotsignalen unter Verwendung des geschätzten Abwärtsstreckenkanals,
    - Bestimmen (S307), ob das mobile Endgerät in wenigstens zwei Versorgungsgebieten von wenigstens zwei Heim-Basisstationen ist, die dieselbe physikalische Zellenidentität haben und synchronisiert sind, aus dem berechneten Pegel einer geschätzten Interferenz an durch das mobile Endgerät empfangenen Daten und aus dem berechneten Pegel an durch das mobile Endgerät empfangenen Pilotsignalen und durch Subtrahieren des Pegels einer geschätzten Interferenz an durch das mobile Endgerät empfangenen Pilotsignalen von dem Pegel einer geschätzten Interferenz an durch das mobile Endgerät empfangenen Daten.

2. Verfahren nach Anspruch 1, **dadurch gekennzeichnet, dass** der Pegel einer geschätzten Interferenz an durch das mobile Endgerät empfangenen Pilotsignalen an Frames von Daten berechnet wird, die erfolgreich decodiert sind, und/oder an Frames von Daten, die nicht erfolgreich decodiert sind.

3. Verfahren nach Anspruch 1 oder 2, **dadurch gekennzeichnet, dass** der Pegel einer geschätzten Interferenz an durch das mobile Endgerät empfangenen Daten an Frames von Daten berechnet wird, die erfolgreich decodiert sind, und/oder an Frames von Daten, die nicht erfolgreich decodiert sind.

4. Verfahren nach Anspruch 1 oder 3, **dadurch gekennzeichnet, dass** ein Pegel einer geschätzten Interferenz an durch das mobile Endgerät empfangenen Daten an Frames berechnet wird, wo Daten erfolgreich decodiert sind, und ein Pegel einer geschätzten Interferenz an durch das mobile Endgerät empfangenen Datensymbolen berechnet wird, wo Daten nicht erfolgreich decodiert sind, und dass das Verfahren einen weiteren Schritt eines Auswählens von einem der Pegel einer geschätzten Interferenz an durch das mobile Endgerät empfangenen Daten aufweist.

5. Verfahren nach Anspruch 4, **dadurch gekennzeichnet, dass** der ausgewählte Pegel einer geschätzten Interferenz an durch das mobile Endgerät empfangenen Daten derjenige ist, der der zuverlässigste ist.

6. Verfahren nach Anspruch 1, **dadurch gekennzeichnet, dass** das Verfahren einen weiteren Schritt eines Vergleichens des Ergebnisses des Subtrahierens mit einer Schwelle aufweist.

7. Verfahren nach Anspruch 1, **dadurch gekennzeichnet, dass** die Bestimmung, ob das mobile Endgerät in wenigstens zwei Versorgungsgebieten von wenigstens zwei Haim-Basisstationen ist, die dieselbe physikalische Zellenidentität haben und synchronisiert sind, einen Schritt eines Berechnens einer Information aus dem berechneten Pegel einer geschätzten Interferenz an durch das mobile Endgerät empfangenen Daten, aus dem berechneten Pegel einer geschätzten Interferenz an durch das mobile Endgerät empfangen Pilotsymbolen, aus einem Leistungsfaktor, der auf Pilotsymbole angewendet ist, die durch die Heim-Basisstation transferiert sind, die das mobile Endgerät bedient, und aus einer Varianz eines Schätzfehlers auf dem Kanal zwischen der bedienenden Heim-Basisstation und dem mobilen Endgerät aufweist.

8. Verfahren nach Anspruch 1, **dadurch gekennzeichnet, dass** die Bestimmung, ob das mobile Endgerät in wenigstens zwei Versorgungsgebieten von wenigstens zwei Heim-Basisstationen ist, die dieselbe physikalische Zellenidentität haben und synchronisiert sind, einen Schritt eines Berechnens einer Information aus dem berechneten Pegel einer geschätzten Interferenz an durch das mobile Endgerät empfangenen Daten, aus dem berechneten Pegel einer geschätzten Interferenz an durch das mobile Endgerät empfangen Pilotsymbolen, aus der Anzahl von Frames von Daten, die erfolgreich decodiert sind, und aus der Anzahl von Frames von Daten, die nicht erfolgreich decodiert sind, aufweist.

9. Verfahren nach Anspruch 8, **dadurch gekennzeichnet, dass** die berechnete Information $(X_d\text{-}X_p)|_{\text{korrigiert}}$ gemäß der folgenden Formel berechnet wird:

$$\left(X_d - X_p\right)|\text{korrigiert} = \left(a\left(X_d - X_p\right) + b\left(X_d^r - X_p - 2\sigma_{h_1}^2\right)\right)/(a + b),$$ wobei a die Anzahl von Frames von Daten ist, die erfolgreich decodiert sind, b die Anzahl von Frames von Daten ist, die nicht erfolgreich decodiert sind, $X_p$ der Pegel einer geschätzten Interferenz an durch das mobile Endgerät empfangenen Pilotsymbolen ist, $X_d$ der Pegel einer geschätzten Interferenz an durch das mobile Endgerät empfangenen Daten ist, berechnet an Frames von Daten, die erfolgreich decodiert sind, $X'_d$ der Pegel einer geschätzten Interferenz an durch das mobile Endgerät empfangenen Daten ist, berechnet an Frames von Daten, die nicht erfolgreich decodiert sind, und $2\sigma_{h_1}^2$ die Varianz der Schätzung des Kanals zwischen dem mobilen Endgerät und der das mobile Endgerät bedienenden Heim-Basisstation ist.

10. Verfahren nach einem der Ansprüche 7 bis 9, **dadurch gekennzeichnet, dass** die berechnete Information mit einer Schwelle verglichen wird.

**11.** Verfahren nach einem der Ansprüche 1 bis 10, **dadurch gekennzeichnet, dass** die Bestimmung, ob das mobile Endgerät in wenigstens zwei Versorgungsgebieten von wenigstens zwei Heim-Basisstationen ist, die dieselbe physikalische Zellenidentität haben und synchronisiert sind, aus der Entwicklung eines berechneten Pegels einer geschätzten Interferenz an durch das mobile Endgerät empfangenen Daten und aus der der Entwicklung des berechneten Pegels einer geschätzten Interferenz an durch das mobile Endgerät empfangenen Pilotsymbolen durchgeführt wird.

**12.** Vorrichtung zum Erkennen, ob ein mobiles Endgerät in wenigstens zwei Versorgungsgebieten von wenigstens zwei Heim-Basisstationen ist, die dieselbe physikalische Zellenidentität haben und synchronisiert sind, wobei eine der Heim-Basisstationen das mobile Endgerät bedient und Daten und Pilotsymbole zum mobilen Endgerät transferiert, wobei wenigstens eine der Heim-Basisstationen ihren Standort ändert, **dadurch gekennzeichnet, dass** die Vorrichtung zum Erkennen im mobilen Endgerät enthalten ist und folgendes aufweist:

- eine Einrichtung zum Schätzen des Abwärtsstreckenkanals basierend auf empfangenen Pilotsymbolen,
- eine Einrichtung zum Berechnen eines Pegels einer geschätzten Interferenz an durch das mobile Endgerät empfangenen Daten unter Verwendung des geschätzten Abwärtsstreckenkanals,
- eine Einrichtung zum Berechnen eines Pegels einer geschätzten Interferenz an durch das mobile Endgerät empfangenen Pilotsignalen unter Verwendung des geschätzten Abwärtsstreckenkanals,
- eine Einrichtung zum Bestimmen, ob das mobile Endgerät in wenigstens zwei Versorgungsgebieten von wenigstens zwei Heim-Basisstationen ist, die dieselbe physikalische Zellenidentität haben und synchronisiert sind, aus dem berechneten Pegel einer geschätzten Interferenz an durch das mobile Endgerät empfangenen Daten und aus dem berechneten Pegel an durch das mobile Endgerät empfangenen Pilotsignalen und durch Subtrahieren des Pegels einer geschätzten Interferenz an durch das mobile Endgerät empfangenen Pilotsignalen von dem Pegel einer geschätzten Interferenz an durch das mobile Endgerät empfangenen Daten.

**13.** Computerprogramm, das direkt ladbar in eine programmierbare Vorrichtung sein kann und Anweisungen oder Teilbereiche eines Codes zum Implementieren der Schritte des Verfahrens nach den Ansprüchen 1 bis 11 umfasst, wenn das Computerprogramm auf einer programmierbaren Vorrichtung ausgeführt wird.

## Revendications

**1.** Procédé pour détecter si un terminal mobile se trouve dans au moins deux zones de couverture d'au moins deux stations de base domestiques ayant le même identifiant de cellule physique et étant synchronisées, l'une des stations de base domestiques servant le terminal mobile et transférant des données au terminal mobile et des symboles pilotes, au moins une des stations de base domestiques changeant son emplacement, **caractérisé en ce que** le procédé est exécuté par le terminal mobile et comporte les étapes de:

- estimation du canal de liaison descendante sur la base de symboles pilotes reçus,
- calcul (S303) d'un niveau d'interférence estimé sur les données reçues par le terminal mobile en utilisant l'estimation du canal de liaison descendante,
- calcul (S304) d'un niveau d'interférence estimé sur les symboles pilotes reçus par le terminal mobile en utilisant l'estimation du canal de liaison descendante,
- détermination (S307) si le terminal mobile se trouve dans au moins deux zones de couverture d'au moins deux stations de base domestiques ayant la même identifiant de cellule physique et étant synchronisées à partir du niveau calculé de l'estimation de l'interférence sur les données reçues par le terminal mobile et du niveau calculé de l'estimation de l'interférence sur les symboles pilotes reçus par le terminal mobile et en soustrayant le niveau d'interférence estimé sur les symboles pilotes reçus par le terminal mobile du niveau d'interférence estimé sur les données reçues par le terminal mobile.

**2.** Procédé selon la revendication 1, **caractérisé en ce que** le niveau d'interférence estimé sur les symboles pilotes reçus par le terminal mobile est calculé sur des trames de données décodées avec succès et/ou sur des trames de données décodées sans succès.

**3.** Procédé selon la revendication 1 ou 2, **caractérisé en ce que** le niveau d'interférence estimé sur les données reçues par le terminal mobile est calculé sur des trames de données décodées avec succès et/ou sur des trames de données décodées sans succès.

**4.** Procédé selon la revendication 1 ou 3, **caractérisé en ce qu'**un niveau d'interférence estimé sur les données reçues par le terminal mobile est calculé sur des trames où les données sont décodées avec succès et un niveau d'interférence estimé sur les symboles de données reçus par le terminal mobile est calculé sur des trames où les données sont décodées sans succès et **en ce que** le procédé comporte en outre l'étape de sélection d'un des niveaux d'interférence estimé sur les données reçues par le terminal mobile.

**5.** Procédé selon la revendication 4, **caractérisé en ce que** le niveau d'interférence estimé sur les données reçues par le terminal mobile sélectionné est celui qui est le plus fiable.

**6.** Procédé selon la revendication 1, **caractérisé en ce que** le procédé comporte en outre l'étape de comparaison du résultat de la soustraction à un seuil.

**7.** Procédé selon la revendication 1, **caractérisé en ce que** la détermination si le terminal mobile se trouve dans au moins deux zones de couverture d'au moins deux stations de base domestiques ayant le même identifiant de cellule physique et étant synchronisées comporte une étape de calcul d'une information à partir du niveau calculé d'interférence estimé sur les données reçues par le terminal mobile, à partir du niveau calculé de l'interférence estimé sur les symboles pilotes reçus par le terminal mobile, à partir d'un facteur de puissance appliquée sur des symboles pilotes transmis par la station de base domestique servant le terminal mobile et d'une variance d'une erreur d'estimation du canal entre la station de base domestique servant et le terminal mobile.

**8.** Procédé selon la revendication 1, **caractérisé en ce que** la détermination si le terminal mobile se trouve dans au moins deux zones de couverture d'au moins deux stations de base domestiques ayant la même identifiant de cellule physique et étant synchronisées comporte une étape de calcul d'une information à partir du niveau calculé d'interférence estimé sur les données reçues par le terminal mobile, à partir du niveau calculé de l'interférence estimé sur les symboles pilotes reçus par le terminal mobile, à partir du nombre de trames de données décodées avec succès et à partir du nombre de trames de données décodées sans succès.

**9.** Procédé selon la revendication 8, **caractérisé en ce que** l'information calculée $(X_d\text{-}X_p))|_{\text{corrected}}$ est calculée selon la formule suivante: $\left(X_d - X_p\right)\Big|_{\text{corrected}} = \left(a\left(X_d - X_p\right) + b\left(X'_d - X_p - 2\sigma_{h_1}^2\right)\right)/\left(a+b\right)$ où $a$ est le nombre de trames de données décodées avec succès, $b$ est le nombre de trames de données décodées sans succès, $X_p$ est le niveau d'interférence estimé sur les symboles pilotes reçus par le terminal mobile, $X_d$ est le niveau d'interférence estimé sur les données reçues par le terminal mobile calculé sur des trames de données décodées avec succès, $X'_d$ est le niveau d'interférence estimé sur les données reçues par le terminal mobile calculé sur des trames de données décodées sans succès, et $2\sigma_{h_1}^2$ est la variance de l'estimation du canal entre le terminal mobile et la station de base domestique servant le terminal mobile.

**10.** Procédé selon l'une quelconque des revendications 7 à 9, **caractérisé en ce que** l'information calculée est comparée à un seuil.

**11.** Procédé selon l'une quelconque des revendications 1 à 10, **caractérisé en ce que** la détermination si le terminal mobile se trouve dans au moins deux zones de couverture d'au moins deux stations de base domestiques ayant le même identifiant de cellule physique et étant synchronisée est effectuée à partir de l'évolution du niveau calculé d'interférence estimé sur les données reçues par le terminal mobile et de l'évolution du niveau calculé d'interférence estimé calculé sur les symboles pilotes reçus par le terminal mobile.

**12.** Dispositif pour détecter si un terminal mobile se trouve dans au moins deux zones de couverture d'au moins deux stations de base domestiques ayant le même identifiant de cellule physique et étant synchronisées, l'une des stations de base domestiques servant le terminal mobile et transférant des données au terminal mobile et des symboles pilotes, au moins une des stations de base domestiques changeant son emplacement, **caractérisé en ce que** le dispositif de détection est inclus dans le terminal mobile et comporte :

   - des moyens d'estimation du canal de liaison descendante sur la base de symboles pilotes reçus,
   - des moyens de calcul d'un niveau d'interférence estimé sur les données reçues par le terminal mobile en utilisant l'estimation du canal de liaison descendante,
   - des moyens de calcul d'un niveau d'interférence estimé sur les symboles pilotes reçus par le terminal mobile en utilisant l'estimation du canal de liaison descendante,
- des moyens de détermination si le terminal mobile se trouve dans au moins deux zones de couverture d'au moins deux stations de base domestiques ayant le même identifiant de cellule physique et étant synchronisées à partir du niveau calculé de l'estimation de l'interférence sur les données reçues par le terminal mobile et du niveau calculé de l'estimation de l'interférence sur les symboles pilotes reçus par le terminal mobile et en soustrayant le niveau d'interférence estimé sur les symboles pilotes reçus par le terminal mobile du niveau d'interférence estimé sur les données reçues par le terminal mobile.

13. Programme d'ordinateur qui peut être directement chargeable dans un dispositif programmable, comportant des instructions ou portions de code pour mettre en oeuvre les étapes du procédé selon les revendications 1 à 11, lorsque ledit programme informatique est exécuté sur un dispositif programmable.

EP 2 642 786 B1

Fig. 1

24

MT

200 — Processor

203 — RAM

Wireless I/F — 205

201

202 — ROM

Fig. 2

S300 — Receive pilots and data

S301 — Decode data

S302 — Decoding successful ?

Estimated Interference on data — S303

Estimated Interference on pilots — S304

Enough samples ? — S305

$X_d - X_p$ — S306

$X_d - X_p >$ Thres ? — S307

Inform collision — S308

Fig. 3

S400 — Receive pilots and data

S401 — Decode data

S402 — Decoding successful ?

S403 — Estimated Interference on data

S404 — Estimated Interference on pilots

S405 — Enough samples ?

S406 — $X'_d - X_p$

S407 — $X'_d - X_p >$ Thresf ?

S408 — Inform collision

Fig. 4

27

S500 — Receive pilots and data

S501 — Decode data

S502 — Decoding successful ?

S503 — Estimated Interference on data

S506 — Estimated Interference on data

S504 — Estimated Interference on pilots

S505 — Enough samples ?

S507 — select $X_d$-$X_p$ or $X'_d$-$X_p$ As most reliable

S508 — Selected > Thres or Thresf?

S509 — Inform collision

Fig. 5

Fig. 6

S700 — Receive pilots and data

S701 — Decode data

S702 — Decoding successful ?

Estimated Interference on data — S703

Estimated Interference on pilots — S704

Enough samples ? — S705

Evaluate evolution $X_d$ and $X_p$ — S706

Decide collision ? — S707

Inform collision — S708

Fig. 7

S800 — Receive pilots and data

S801 — Decode data

S802 — Decoding successful ?

Estimated Interference on data — S803

Estimated Interference on pilots$_p$ — S804

Enough samples ? — S805

$X_d - X_p + (\alpha-1)\sigma_\varepsilon^2$ — S806

Decide collision ? — S807

Inform collision — S808

Fig. 8

## REFERENCES CITED IN THE DESCRIPTION

**Patent documents cited in the description**

- US 20110274097 A